# EUROPEAN PATENT APPLICATION

(11) **EP 3 886 064 A1**
(43) Date of publication of application: **29.09.2021**
(21) Application number: 21162373.1
(22) Date of filing: 12.03.2021
(51) Int. Cl.: G07G 1/00, G07G 1/01

(54) **SALES DATA PROCESSING DEVICE AND METHOD**

(30) Priority: 25.03.2020 JP 2020054850
(71) Applicant: Toshiba TEC Kabushiki Kaisha, Tokyo 141-8562 (JP)
(72) Inventor: Suzuki, Katsuyuki, Shinagawa-ku, Tokyo 141-8562 (JP)
(74) Representative: Bandpay & Greuter

(57) **Abstract**

According to one embodiment, a sales data processing device includes a display configured to rotate to face a first direction, from which a clerk operates the sale data processing device in a first mode, and a second direction different from the first direction, from which a customer operates the sales data processing device in a second mode. A detection unit is configured to detect whether the display faces the first direction or the second direction and indicate the first or second mode according to the detected first or second direction. A processor is configured to enable a first group of components to be operated in the first mode and to enable a second group of components to be operated in the second mode according to the indicated first or second mode of the detection unit.

## Description

### FIELD

Embodiments described herein relate generally to a sales data processing device, such as a point-of-sales terminal, and a method of operating such a sales data processing apparatus.

### BACKGROUND

In recent years, in stores such as supermarkets, convenience stores, and mass merchandisers, there is a case in which the commodity data processing and settlement processing (collectively referred to as "transaction processing" or "checkout processing") at the sales data processing devices at the store can be switched between a clerk mode and a self-service mode. In the clerk mode, transaction processing at a sales data processing device, such as point-of-sales (POS) terminal, is performed by a store clerk. In a self-service mode, transaction processing (or at least some aspects thereof) is performed at a sales data processing device by the customer alone. At a busy time of the store, a clerk may switch a POS terminal to the clerk mode and performs the transaction processing. However, in a quiet time, all or some of the POS terminals at the store may be switched to the self-service mode so the customer can perform the transaction processing operations.

However, in order to switch a POS terminal from the clerk mode to the self-service mode, or to switch a POS terminal from the self-service mode to the clerk mode, typically, the POS terminal, as a whole, must be rotated by about 180° to switch between facing the clerk position or the customer position, as shown in the related art (see, for example, JP-A-2010-20370). However, in this case, when switching from the clerk mode to the self-service mode, it is also necessary to disable those devices and components which are unnecessary or undesirable for customer operation, but such an operation is cumbersome, thus the switching between the clerk mode and self-service mode is not easy.

### DESCRIPTION OF THE DRAWINGS

FIG. 1 is a perspective view showing a POS terminal and peripheral devices.
FIG. 2 is an explanatory diagram showing a POS terminal operating in a clerk mode.
FIG. 3 is an explanatory diagram showing a POS terminal operating in a self-service mode.
FIG. 4 is an explanatory diagram schematically showing a front surface (operation surface) of an automatic change dispenser.
FIG. 5 is a block diagram of a POS terminal.
FIG. 6 is a schematic memory map or data structure of a device storage unit.
FIG. 7 is a block diagram showing schematic functional aspects of a POS terminal.
FIG. 8 is a flowchart of aspects of control processing of a POS terminal.
FIG. 9 is a flowchart of aspects of control processing of a POS terminal.

### DETAILED DESCRIPTION

At least one embodiment of the present disclosure provides a sales data processing device and a method of operating a sales data processing device that permits the sales data processing device to be easily switched back and forth between a clerk mode and a self-service mode.

In general, according to one embodiment, a sales data processing device includes a display configured to rotate to face a first direction, from which a clerk operates the sale data processing device in a first mode, and a second direction different from the first direction, from which a customer operates the sales data processing device in a second mode. A detection unit is configured to detect whether the display faces the first direction or the second direction and indicate the first or second mode according to the detected first or second direction. A processor is configured to enable a first group of components to be operated in the first mode and to enable a second group of components to be operated in the second mode according to the indicated first or second mode of the detection unit.

Preferably, the first group includes a first keyboard to be operated by a clerk, and the second group includes a touch panel integrated with the display.

Preferably, the first group includes a first scanner that allows the clerk to read commodity information, the second group includes a second scanner that allows the customer to read commodity information.

Preferably, the first scanner is a hand-held scanner.

Preferably, the second scanner is a fixed scanner.

Preferably, the detection unit comprises a mechanical switch configured to be activated by movement of the display to face the second direction.

Preferably, the first group includes a cash drawer, and the second group includes an automatic change dispenser.

Preferably, the first group includes a first printer, and the second group includes a second printer used when the customer operates the sales data processing device.

The sales data processing apparatus may be configured as a point-of-sales terminal.

There is also provided a non-transitory computer readable storage medium storing program instructions which, when executed by a processor of a sales data processing device having a display configured to rotate to face a first direction, from which a clerk operates the sale data processing device in a first mode, and a second direction different from the first direction, from which a customer operates the sales data processing device in a second mode, and a detection unit configured to detect whether the display faces the first direction or the second direction and indicate the first or second mode according to the detected first or second direction, cause the processor to perform a method comprising: enabling a first group of components to be operated for sales data processing when the first mode is indicated by the detection unit; and enabling a second group of components to be operated in for sales data processing when the second mode is indicated by the detection unit, wherein the first group and the second group are different from each other.

Preferably, the first group includes a first keyboard, a first scanner, a cash drawer, and a first printer, and the second group includes a touch panel, a second scanner, a change dispenser, and a second printer.

Preferably, the touch panel is integrated with the display.

Preferably, the first scanner is a hand-held scanner.

Preferably, the second scanner is a fixed scanner.

Hereinafter, certain example embodiments will be described with reference to the drawings. In the example embodiments, a point of sales (POS) terminal will be described as one example of a sales data processing device, but the present disclosure is not limited to these example embodiments.

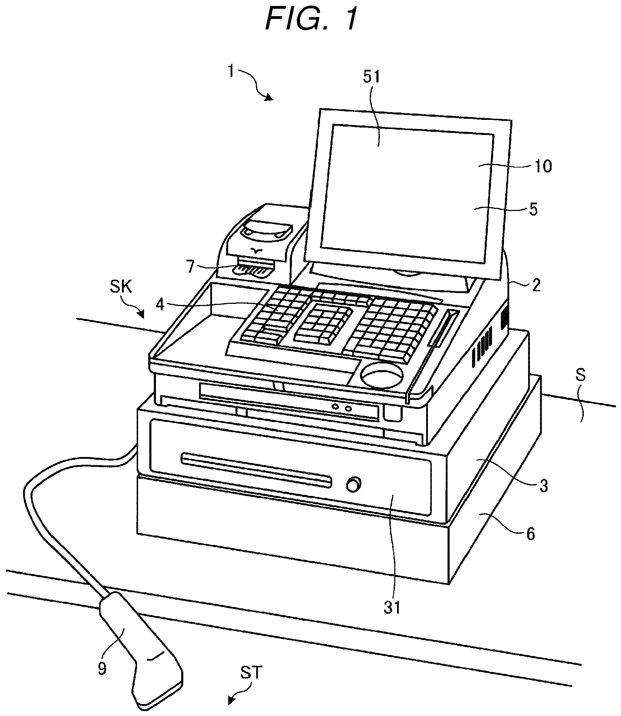

FIG. 1 is a perspective view showing an external appearance of a POS terminal 1 of an embodiment and some peripheral devices connected to the POS terminal 1.

Placement tables S can be arranged side by side in a store checkout region of the store. In some examples, only a single placement table S may be provided. The placement table S has a substantially rectangular surface and is a table on which the POS terminal 1, a money storage box 3, and an automatic change dispenser 6 are placed. One side of the placement table S (facing side in FIG. 1) is a clerk side ST where a clerk is to be located, and the other side (far side in FIG. 1) of the placement table S is a customer side SK where a customer is to be located.

In a transaction with a customer, the POS terminal 1 executes registration processing (processing related to obtaining commodity data for items being purchased in the transaction) and settlement processing for commodities being purchased by the customer. The POS terminal 1 reads code symbol, such as a barcode, attached to a commodity being purchased in the transaction and acquires a commodity code for specifying the corresponding commodity. The data processing executed based on the reading of the code symbol is a process by which the POS terminal 1 displays the commodity name and price of the corresponding commodity and also stores the commodity information in a commodity information unit (a registered item list) or the like, based on commodity information (commodity name, price, and the like) of the registered commodity obtained based on the acquired commodity code. In some examples, POS terminal 1 may capture an image of the commodity being registered and acquire the corresponding commodity code for the commodity based on the captured image.

The settlement processing is a process of displaying the total amount of money due in the transaction (based on the commodity information stored in the RAM or the like in the registration processing), a process of calculating and displaying change due amount based on the deposit received from the customer, and a process of instructing the change dispenser to dispense the change due. The settlement processing also can also include a process of dispensing a receipt on which registered commodity information and settlement information (total amount, deposit amount, change amount, and the like) are printed.

The POS terminal 1 includes a main body 2 and money storage box 3. The main body 2 has a power supply unit and a control circuit board built therein. In this example, main body 2 includes a keyboard 4, a display unit 5, a first printer 7, and a touch screen 10 (integrated with display unit 5). Further, the main body 2 is connected to a hand-held scanner 9 that can read a barcode attached to a commodity. The money storage box 3 includes a drawer 31 that can be opened toward the clerk side ST and the drawer 31 stores money received from the customer or reserve money to be handed to the customer as change.

The keyboard 4 (first device, first keyboard) is a keyboard operated by a clerk. The keyboard 4 is a keyboard provided in the POS terminal 1 and includes numeric keys for entering numbers and various function keys.

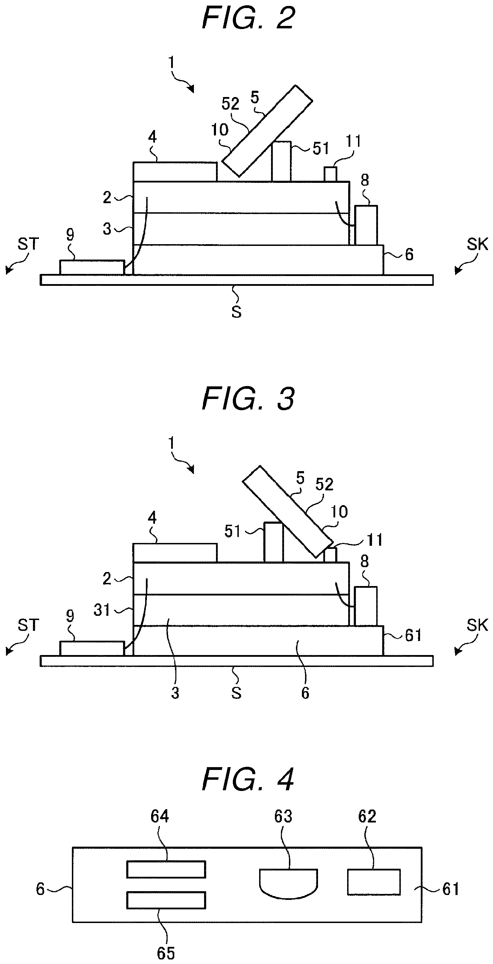

The display unit 5 is composed of, for example, a liquid crystal display. The display unit 5 displays characters and images on a display surface 52. The display unit 5 is configured to be horizontally rotatable about a support shaft 51 (see FIGS. 2 and 3). The display unit 5 turns the display surface 52 around the support shaft 51 toward the clerk side ST (first direction). When operating the POS terminal 1, the clerk turns the display unit 5 toward the clerk side ST. Further, the display unit 5 turns the display surface 52 around the support shaft 51 toward the customer side SK (second direction). When operating the POS terminal 1, the customer turns the display unit 5 toward the customer side SK.

The touch screen 10 configured of a transparent touch panel is provided on the surface of the display unit 5. A clerk or a customer operates the touch screen 10 by pressing a position corresponding to a key displayed on the display unit 5. By doing so, the touch screen 10 permits selection of the keys, icons, and/or buttons displayed on the display unit 5. The touch screen 10 provides, for example, a commodity key for selecting a commodity, a closing key 101 that is to be operated for ending the commodity registration processing and moving to a closing (settlement) operation, or the like.

The first printer 7 (includes a thermal head, a storage unit for storing roll-shaped receipt paper, a conveyance unit (none of which is shown), and the like. The conveyance unit pulls out one end of the receipt paper from the storage unit and conveys the receipt paper, and the thermal head prints commodity information, settlement information, and the like regarding the commodity on the conveyed receipt paper. The first printer 7 dispenses the printed receipt toward the clerk side ST. The clerk receives the receipt dispensed by the first printer 7.

Further, the POS terminal 1 is connected to the money storage box 3 (first device). The money storage box 3 is installed under the POS terminal 1. The money storage box 3 may be referred to as a cash drawer 3 in some instances. The money storage box 3 stores the drawer 31 inside. The money storage box 3 opens the drawer 31 to the clerk side ST in response to an opening signal from the POS terminal 1. Further, the opened drawer 31 is closed in the money storage box 3 by the clerk. The drawer 31 stores marketable securities including money such as coins and bills. The clerk deposits the purchase price of the commodity from the customer and stores the money in the drawer 31. Further, the clerk takes out the change to be handed to the customer from the drawer 31.

Further, the POS terminal 1 is connected to the automatic change dispenser 6 (second device). The automatic change dispenser 6 is concerned with the price of commodity, stores the money input by the customer themselves, and pays out the change amount to the customer. The automatic change dispenser 6 will be described later with reference to FIG. 4.

Further, the POS terminal 1 connects to the handheld scanner 9 (also referred to as a "touch scanner"). The handheld scanner 9 reads a symbol attached to a commodity by a clerk holding in hand. The POS terminal 1 acquires a commodity code that specifies the commodity based on the read symbol.

Further, as will be described in detail with reference to FIGS. 2 and 3, the POS terminal 1 connects to a second printer 71 (second device). The second printer 71 has the same configuration as the first printer 7. The second printer 71 prints commodity information, settlement information, and the like regarding the commodity on the receipt paper. The second printer 71 dispenses the printed receipt toward the customer side SK. The customer receives the receipt dispensed by the second printer 71.

The details will be described with reference to FIGS. 2 and 3, but the POS terminal 1 connects to a stationary scanner 8 (second device, second scanner). The scanner 8 has a built-in polygon mirror, scans a laser beam to emit the laser beam from the scanner 8, receives the reflected light reflected by the symbol, and reads the symbol. The scanner 8 is operated by the customer to read the symbol attached to the commodity. The scanner 8 may capture an image of the commodity and read the symbol.

Hereinafter, the POS terminal 1 that operates in the clerk mode (first mode) will be described. FIG. 2 is an explanatory diagram showing the POS terminal 1 operating in the clerk mode. As shown in FIG. 2, the POS terminal 1 includes a detection unit 11. The detection unit 11 is, for example, a mechanical switch. The detection unit 11 is switched off when the display unit 5 faces the clerk side ST, but is switched on by the display unit 5 abutting on the detection unit 11 when the display unit 5 faces the customer side SK side. In this way, the detection unit 11 outputs different voltages when the display unit 5 faces the clerk side ST and when the display unit 5 faces the customer side SK. That is, due to the output from the detection unit 11, it is possible to determine whether the display unit 5 faces the clerk side ST or the customer side SK. The detection unit 11 may use, for example, a transmission-type optical sensor to switch off when the display unit 5 faces the clerk side ST and to switch on by blocking the light by the display unit 5 when the display unit 5 faces the customer side SK.

In the case of FIG. 2, the display surface 52 of the display unit 5 faces the clerk side ST. Therefore, the detection unit 11 detects that the switch is in the OFF state (that is, the display surface 52 of the display unit 5 faces the clerk side ST) and outputs a switch-off signal. When the POS terminal 1 (more precisely, a control unit 400 described later) receives the signal indicating that the switch is off from the detection unit 11, the POS terminal 1 sets the POS terminal 1 in the clerk mode. In addition, in FIG. 2, the handheld scanner 9 is mounted on the clerk side ST of the POS terminal 1 so that the clerk can operate the handheld scanner 9. The scanner 8 is mounted on the customer side SK of the POS terminal 1 so that the customer can operate the scanner 8.

Next, the POS terminal 1 that operates in the self-service mode (second mode) will be described. FIG. 3 is an explanatory diagram showing the POS terminal 1 operating in the self-service mode. In the case of FIG. 3, the display surface 52 of the display unit 5 faces the customer side SK. Therefore, the detection unit 11 detects that the switch is ON (that is, the display surface 52 of the display unit 5 faces the customer side SK) and outputs a switch-on signal. When the POS terminal 1 (more precisely, the control unit 400 described later) receives the signal indicating that the switch is on from the detection unit 11, the POS terminal 1 sets the POS terminal 1 in the self-service mode.

Next, the operation of the automatic change dispenser 6 will be described. FIG. 4 is an explanatory view schematically showing the front (operation surface 61) of the automatic change dispenser 6 as seen from the customer side SK. As shown in FIG. 4, the operation surface 61 of the automatic change dispenser 6 faces the customer side SK. The automatic change dispenser 6 includes a coin insertion port 62, a coin payout port 63, a bill insertion port 64, and a bill payout port 65 on the operation surface 61. The coin insertion port 62 is an opening for inserting a coin. The customer inserts the amount of coins out of the price paid for the purchase of the commodity into the coin insertion port 62. The coins inserted into the coin insertion port 62 are stored in the automatic change dispenser 6 by denomination. The coin payout port 63 is a receiving port for receiving coins paid out from the automatic change dispenser 6 when a change is generated for the paid price. The customer themselves takes the change paid out to the coin payout port 63.

The bill insertion port 64 is an opening for inserting a bill. The customer inserts the amount of bills out of the price paid for the purchase of the commodity into the bill insertion port 64. The bills inserted into the bill insertion port 64 are stored in the automatic change dispenser 6 by denomination. The bill payout port 65 is a receiving port for receiving bills paid out from the automatic change dispenser 6 when a change is generated for the paid price. The customer themselves takes the change paid out to the bill payout port 65.

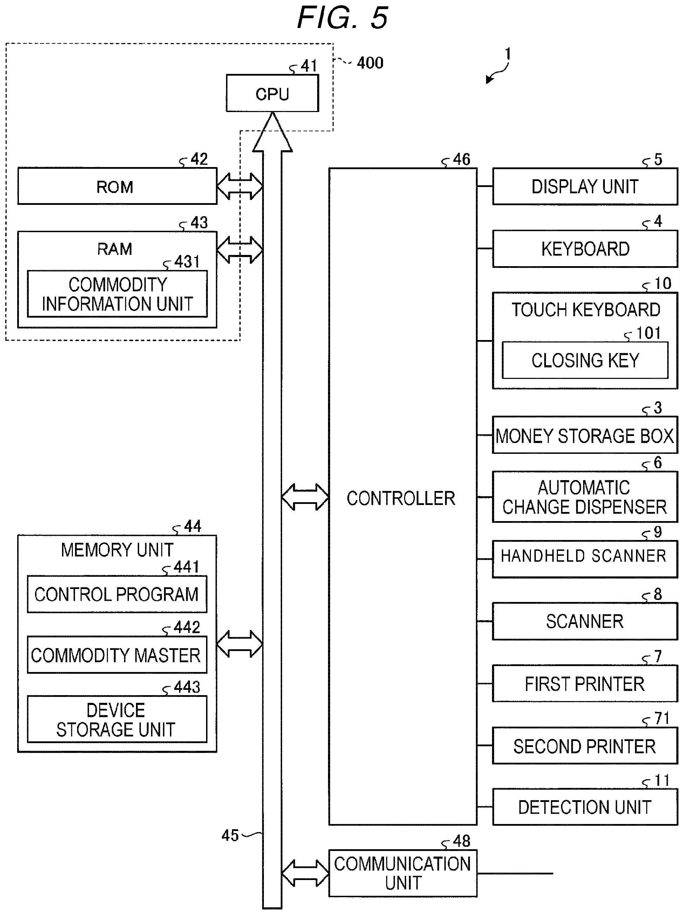

Next, the hardware configuration of the POS terminal 1 will be described. FIG. 5 is a block diagram showing a hardware configuration of the POS terminal 1. As shown in FIG. 5, the POS terminal 1 includes a central processing unit (CPU) 41, a read only memory (ROM) 42, a random-access memory (RAM) 43, a memory unit 44, and the like. The CPU 41 is a control subject. The ROM 42 stores various programs. The RAM 43 loads programs and various data. The memory unit 44 stores various programs. The CPU 41, the ROM 42, the RAM 43, and the memory unit 44 are connected to each other via a bus 45. The CPU 41, the ROM 42, and the RAM 43 form the control unit 400. That is, the control unit 400 executes the control processing related to the POS terminal 1 described later by the CPU 41 operating according to the control program stored in the ROM 42 or the memory unit 44 and loaded in the RAM 43.

The RAM 43 includes a commodity information unit 431. The commodity information unit 431 stores the commodity information of the data-processed commodity (the price of the commodity, the commodity name, and the like).

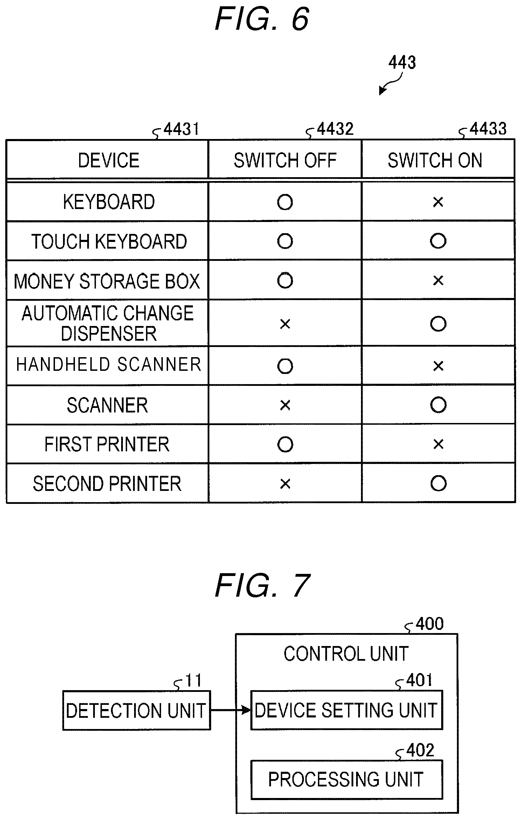

The memory unit 44 is a nonvolatile memory such as a hard disc drive (HDD) or a flash memory that retains stored information even when the power is turned off. The memory unit 44 includes a control program region 441, a commodity master 442, and a device list region 443. The control program region 441 stores a control program for controlling the POS terminal 1. The commodity master 442 stores commodity information for each commodity available for purchase at the store. The device list region 443 stores a list of first devices which are operable in the clerk mode and a list of second devices which are operable in the self-service mode. The device list region 443 will be described further with reference to FIG. 6.

In addition, the control unit 400 is electrically connected to the display unit 5, the keyboard 4, the touch screen 10, the money storage box 3, the automatic change dispenser 6, the handheld scanner 9, the scanner 8, the first printer 7, the second printer 71, and the detection unit 11, via the bus 45 and a controller 46.

Further, the control unit 400 is connected to a communication unit 48 via the bus 45. The communication unit 48 connects to another POS terminal 1 or a store server (not shown) that is a higher-level device via a communication line to exchange information with each other.

The device list region 443 stores information indicating which devices can operate when the POS terminal 1 is in the clerk mode and which devices can operate when the POS terminal 1 is in the self-service mode. The device list region 443 includes an overall device list 4431 (referred to as a "device list"), a switch-off list 4432, and a switch-on list 4433. The device list 4431 lists all devices connected to the POS terminal 1. The switch-off list 4432 stores information indicating which of the connected devices in the device list 4431 are permitted to operate when the detection unit 11 detects a switch-off. That is, the switch-off list 4432 stores information indicating which of the connected devices in the device list 443 operate when the display surface 52 faces the clerk side ST. In the example of FIG. 6, those devices having a circle mark stored in switch-off list 4432 are operable in the clerk mode. That is, the keyboard 4, the touch screen 10, the money storage box 3, the handheld scanner 9, and the first printer 7 are the devices that can operate in the first mode after the detection unit 11 detects the switch-off. These devices may be collectively referred to as "first devices" in some instances.

The switch-on list 4433 stores information indicting which of the connected devices in the device list 4431 are operable after the detection unit 11 detects a switch-on. That is, the switch-on list 4433 stores information indicating which of the devices in the device list 4431 operate when the display surface 52 faces the customer side SK. In the example of FIG. 6, those devices having a circle mark in the switch-on list 4433 (that is, the touch screen 10, the automatic change dispenser 6, the scanner 8, and the second printer 71) are devices that can operate when in the second mode after the detection unit 11 detects a switch-on. These devices can be collectively referred to as "second devices" in some instances.

FIG. 7 is a block diagram showing aspects of a functional configuration of the POS terminal 1. As shown in FIG. 7, the control unit 400 of the POS terminal 1 functions as a device setting unit 401 and a processing unit 402 by following the control program stored in the ROM 42 or the control program region 441 of the memory unit 44.

The device setting unit 401 enables the first devices (the operable devices as indicated by the switch-off list 4432), to operate in the clerk mode (more particularly, when the detection unit 11 detects that the display surface 52 faces the clerk side ST). In this case, the second devices are inoperable (except the touch screen 10 which is usable in both the clerk mode and the self-service mode). When the detection unit 11 detects that the display surface 52 faces the customer side SK, the second devices (the operable devices as indicated by the switch-on list 4433) to operate in the self-service mode. In this case, the first devices (other than touch screen 10) are inoperable.

Specifically, when the detection unit 11 detects that the display surface 52 faces the clerk side ST (that is, when the detection unit 11 outputs the OFF signal), the device setting unit 401 sets the keyboard 4, the touch screen 10, the money storage box 3, the handheld scanner 9, and the first printer 7 to be operable. When the detection unit 11 detects that the display surface 52 faces the customer side SK (that is, when the detection unit 11 outputs the ON signal), the device setting unit 401 sets the touch screen 10, the automatic change dispenser 6, the scanner 8, and the second printer 71 to be operable.

The processing unit 402 controls whichever devices are enabled devices. Specifically, the processing unit 402 controls the keyboard 4, the touch screen 10, the money storage box 3, the handheld scanner 9, and the first printer 7 when clerk mode is enabled. The processing unit 402 controls the touch screen 10, the automatic change dispenser 6, the scanner 8, and the second printer 71 when the self-service mode is enabled.

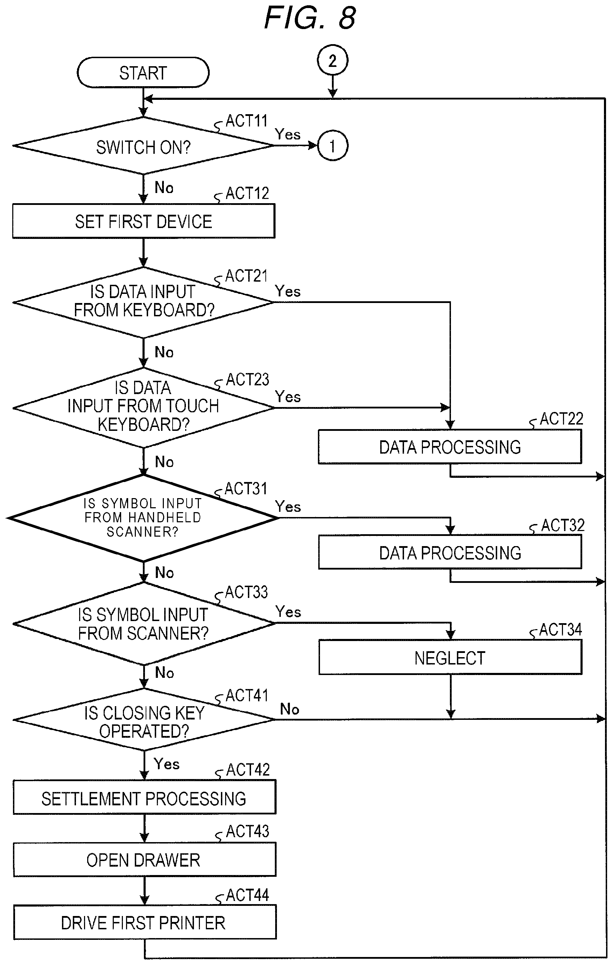

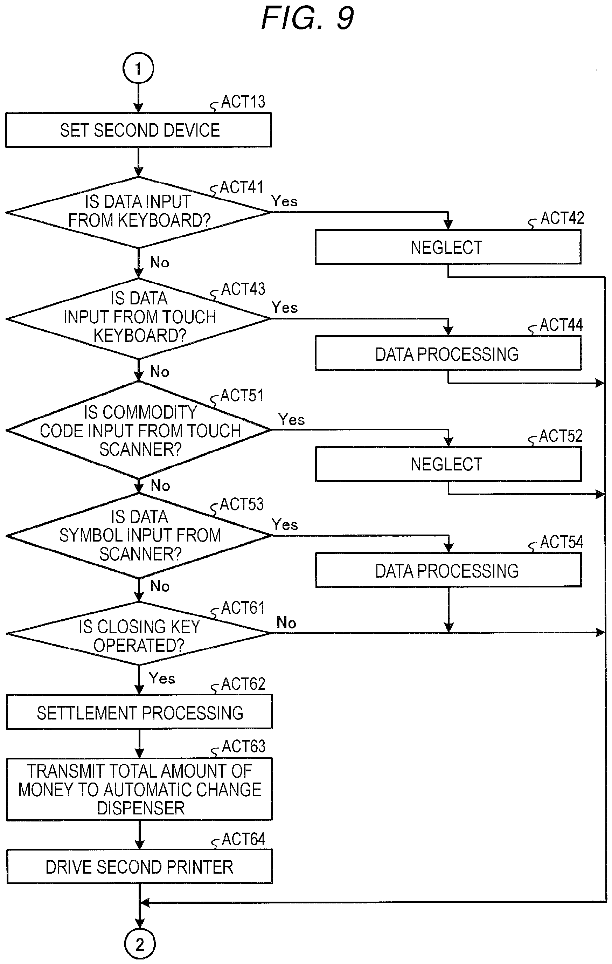

FIGS. 8 and 9 are flowcharts of control processing of the POS terminal 1. The flowcharts shown in FIGS. 8 and 9 illustrate the control performed based on the stored content of the device list region 443 shown in FIG. 6. Therefore, if the stored content of the device list region 443 changes, the control of the POS terminal 1 shown in FIGS. 8 and 9 is changed according to the stored content of the device storage unit 443.

The control unit 400 of the POS terminal 1 determines whether the switch of the detection unit 11 is turned on to determine whether the display surface 52 of the display unit 5 faces the clerk side ST or the customer side SK (ACT 11). When it is determined that the switch is off (No in ACT 11), the device setting unit 401 enables the first devices (the clerk-mode operable devices as listed in switch-off list 4432) to be operated (ACT 12). In this case, the control unit 400 sets the POS terminal 1 to be in the clerk mode.

Next, the control unit 400 determines whether the keyboard 4 is operated and data is input via the keyboard 4(ACT 21). When the keyboard 4 is operated and data is input, the processing unit 402 executes data processing based on the input key data because the keyboard 4 was set to be operable in ACT 12 (ACT 22). After ACT 22, the control unit 400 returns to ACT 11. When it is determined that the keyboard 4 is not operated (No in ACT 21), the control unit 400 determines whether the touch screen 10 is operated and data is input (ACT 23). When the touch screen 10 is operated (pressed) and data is input, the processing unit 402 executes data processing based on the input key data (ACT 22) because the touch screen 10 is set to be operable in ACT 12. After ACT 22, the control unit 400 returns to ACT 11.

When it is determined that the touch screen 10 is not operated (No in ACT 23), the control unit 400 determines whether a symbol read by the handheld scanner 9 is input (ACT 31). When it is determined that a symbol read by the handheld scanner 9 is input (Yes in ACT 31), the processing unit 402 executes data processing related to the commodity based on the input symbol because the handheld scanner 9 was set as an operable device in ACT 12 (ACT 32). In ACT 32, the processing unit 402 acquires a commodity code that identifies a commodity being registered, then reads the commodity information for the commodity from the commodity master 442, and stores the commodity information in the commodity information unit 431. After ACT 32, the control unit 400 returns to ACT 11.

When it is determined that the symbol is not read from the handheld scanner 9 (No in ACT 31), the control unit 400 determines whether a symbol read by the scanner 8 is input (ACT 33). When it is determined that a symbol read by the scanner 8 is input (Yes in ACT 33), the processing unit 402 neglects (ignores) the input symbol (discards the read symbol) and does not execute the data processing related to the commodity because the scanner 8 was not set as an operable device in ACT 12 (ACT 34). After ACT 34, the control unit 400 returns to ACT 11.

If a symbol is not read from the scanner 8 (No in ACT 33), the control unit 400 determines whether the closing key 101 is operated (ACT 41). When it is determined that the closing key 101 has been operated (Yes in ACT 41), the control unit 400 executes the settlement processing based on the commodity information stored in the commodity information unit 431 (ACT 42).

Next, the processing unit 402 transmits a signal for opening the drawer 31 to the money storage box 3 (which was set as operable in ACT 12) (ACT 43). Then, the processing unit 402 transmits the commodity information and the settlement information to the first printer 7 (which was set as operable in ACT 12) (ACT 44). Then, the control unit 400 returns to ACT 11. When it is determined that the closing key 101 has not been operated (No in ACT 41), the control unit 400 returns to ACT 11.

If it is determined in ACT 11 that the switch is on (Yes in ACT 11), the device setting unit 401 enables the second devices (the self-service mode operable devices as listed in switch-on list 4433) to be operated (ACT 13). In this case, the control unit 400 sets the POS terminal 1 in the self-service mode.

Next, the control unit 400 determines whether the keyboard 4 is operated and data is input (ACT 41). When the keyboard 4 is operated and data is input, the processing unit 402 neglects (ignores) the key data from the keyboard 4 (ACT 42). That is, processing unit 402 does not execute the data processing based on the key data from the keyboard 4 because the keyboard 4 was not set as an operable device in ACT 13. After ACT 22, the control unit 400 returns to ACT 11. When it is determined that the keyboard 4 is not operated (No in ACT 41), the control unit 400 then determines whether the touch screen 10 is operated and data is input (ACT 43). When the touch screen 10 is operated and data is input, the processing unit 402 executes data processing based on the input key data because the touch screen 10 is set as operable in ACT 13 (ACT 44). After ACT 44, the control unit 400 returns to ACT 11.

When it is determined that the touch screen 10 is not operated (No in ACT 43), the control unit 400 determines whether the symbol read by the handheld scanner 9 is input (ACT 51). When it is determined that a symbol read by the handheld scanner 9 is input (Yes in ACT 51), the processing unit 402 neglects (ignores) the input symbol because the handheld scanner 9 was not set as operable in ACT 13 (ACT 52). That is, the processing unit 402 does not execute the data processing based on the symbol input from the handheld scanner 9.

When it is determined that a symbol is not read from the handheld scanner 9 (No in ACT 51), the control unit 400 determines whether a symbol read by the scanner 8 is input (ACT 53). When it is determined that a symbol read by the scanner 8 is input (Yes in ACT 53), since the scanner 8 was set as operable in ACT 13, the processing unit 402 executes the data processing for acquiring the commodity code that identifies the commodity based on the read symbol, reading the commodity information from the commodity master 442, and storing the commodity information in the commodity information unit 431 (ACT 54). After ACT 54, the control unit 400 returns to ACT 11.

When it is determined that a symbol is not read from the scanner 8 (No in ACT 53), the control unit 400 determines whether the closing key 101 has been operated (ACT 61). When it is determined that the closing key 101 has been operated (Yes in ACT 61), the control unit 400 executes the settlement processing based on the commodity information stored in the commodity information unit 431 (ACT 62).

Next, the processing unit 402 transmits the amount to be paid by the customer to settle the transaction based on the settlement processing to the automatic change dispenser 6 (which was set operable in ACT 13) (ACT 63). Then, the processing unit 402 transmits the commodity information and the settlement information to the second printer 71 (which was set as operable in ACT 13) (ACT 64). Then, the control unit 400 returns to ACT 11. If it is determined that the closing key 101 has not yet been operated (No in ACT 61), the control unit 400 returns to ACT 11.

As described above, the POS terminal 1 performs data processing for selling a commodity whenever the commodity information is input, and includes the display unit 5 that enables the display surface 52 for displaying information to be directed to the first direction from which a clerk operates the POS terminal 1 in the clerk mode and the second direction (which is different from the first direction) from which a customer operates the POS terminal 1 in the self-service mode. The detection unit 11 detects whether the display surface 52 faces the first direction or the second direction. The setting unit 401 enables the first devices, which are those connected devices that can be used when the POS terminal 1 is operated in the clerk mode, if the detection unit 11 detects that the display surface 52 faces the first direction. The setting unit 401 enables the second devices, which are those connected devices that can be used when the POS terminal 1 is operated in the self-service mode, if the detection unit 11 detects that the display surface 52 faces the second direction. The processing unit 402 controls the first devices when they are enabled and the second devices when they are enabled.

Such a POS terminal 1 can automatically operate in the appropriate manner for the clerk mode or the self-service mode according to switching of the facing direction the display surface 52 or other triggering event. Therefore, it is possible to easily switch between the clerk mode and the self-service mode.

For example, in an embodiment, the keyboard 4, the touch screen 10, the money storage box 3, the handheld scanner 9, and the first printer 7 are the first devices, and the touch screen 10, the automatic change dispenser 6, the scanner 8, and the second printer 71 are the second devices. However, the present disclosure is not limited thereto and what is used as the first device and what is used as the second device may be appropriately selected depending on the necessary usage status of the POS terminal 1 in the clerk mode or the self-service mode.

The control program executed by the POS terminal 1 of an embodiment can be provided by being recorded on a non-transitory computer-readable recording medium such as a CD-ROM, a flexible disk (FD), a CD-R, or a digital versatile disk (DVD) as a file in an installable format or an executable format.

Furthermore, a control program executed by the POS terminal 1 may be stored in a computer connected to a network such as the Internet and may be provided by being downloaded via the network. The program executed by the POS terminal 1 of the embodiment may otherwise be provided or distributed via a network such as the Internet.

Further, the control program executed by the POS terminal 1 of an embodiment may be provided by being incorporated in a ROM or the like in advance.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A sales data processing device, comprising:
a display configured to rotate to face a first direction, from which a clerk operates the sale data processing device in a first mode, and a second direction different from the first direction, from which a customer operates the sales data processing device in a second mode;
a detection unit configured to detect whether the display faces the first direction or the second direction and indicate the first or second mode according to the detected first or second direction; and
a processor configured to enable a first group of components to be operated in the first mode and to enable a second group of components to be operated in the second mode according to the indicated first or second mode of the detection unit.

2. The sales data processing device according to claim 1, wherein
the first group includes a first keyboard to be operated by a clerk, and
the second group includes a touch panel integrated with the display.

3. The sales data processing device according to claim 1 or 2, wherein
the first group includes a first scanner that allows the clerk to read commodity information, and
the second group includes a second scanner that allows the customer to read commodity information.

4. The sales data processing apparatus according to claim 3, wherein the first scanner is a hand-held scanner.

5. The sales data processing apparatus according to claim 3 or 4, wherein the second scanner is a fixed scanner.

6. The sales data processing apparatus according to any one of claims 1 to 5, wherein the detection unit comprises a mechanical switch configured to be activated by movement of the display to face the second direction.

7. The sales data processing device according to any one of claims 1 to 6, wherein
the first group includes a cash drawer, and
the second group includes an automatic change dispenser.

8. The sales data processing device according to any one of claims 1 to 7, wherein
the first group includes a first printer, and
the second group includes a second printer used when the customer operates the sales data processing device.

9. The sales data processing apparatus according to any one of claims 1 to 8 configured as a point-of-sales terminal.

10. A non-transitory computer readable storage medium storing program instructions which, when executed by a processor of a sales data processing device having a display configured to rotate to face a first direction, from which a clerk operates the sale data processing device in a first mode, and a second direction different from the first direction, from which a customer operates the sales data processing device in a second mode, and a detection unit configured to detect whether the display faces the first direction or the second direction and indicate the first or second mode according to the detected first or second direction, cause the processor to perform a method comprising:
enabling a first group of components to be operated for sales data processing when the first mode is indicated by the detection unit; and
enabling a second group of components to be operated in for sales data processing when the second mode is indicated by the detection unit, wherein
the first group and the second group are different from each other.

11. The non-transitory computer readable storage medium according to claim 10, wherein
the first group includes a first keyboard, a first scanner, a cash drawer, and a first printer, and
the second group includes a touch panel, a second scanner, a change dispenser, and a second printer.

12. The non-transitory computer readable storage medium according to claim 11, wherein the touch panel is integrated with the display.

13. The non-transitory computer readable storage medium according to claim 11 or 12, wherein the first scanner is a hand-held scanner.

14. The non-transitory computer readable storage medium according to any one of claims 11 to 13, wherein the second scanner is a fixed scanner.
